# EUROPÄISCHE PATENTSCHRIFT

(11) **EP 3 297 877 B1**
(45) Veröffentlichungstag und Bekanntmachung des Hinweises auf die Patenterteilung: **31.07.2019**
(21) Anmeldenummer: 16724408.6
(22) Anmeldetag: 20.05.2016
(51) Int. Cl.: B60T 7/10, B60T 13/74

(54) **VERFAHREN ZUM BEREITSTELLEN EINER BREMSKRAFT IN EINEM FAHRZEUG**
METHOD TFOR PROVIDING A BRAKING FORCE IN A VEHICLE
MÉTHODE POUR RÉALISER UNE FORCE DE FREINAGE DANS UN VEHICULE

(30) Priorität: 22.05.2015 DE 102015209480; 11.04.2016 DE 102016205985; 19.05.2016 DE 102016208605
(43) Veröffentlichungstag der Anmeldung: 28.03.2018
(73) Patentinhaber: Robert Bosch GmbH, 70442 Stuttgart (DE)
(72) Erfinder: BAEHRLE-MILLER, Frank, 71101 Schoenaich (DE); MANNHERZ, Edith, 74199 Untergruppenbach (DE); ENGLERT, Andreas, 74199 Untergruppenbach (DE); PUTZER, Tobias, 74177 Bad Friedrichshall (DE)
(86) Internationale Anmeldenummer: PCT/EP2016/061451
(87) Internationale Veröffentlichungsnummer: WO 2016/188910

(56) Entgegenhaltungen:
- DE-A1- 19 736 997
- DE-A1-102011 078 900
- DE-A1-102012 205 576
- FR-A1- 2 911 839

## Beschreibung

Die Erfindung bezieht sich auf ein Verfahren zum Bereitstellen einer Bremskraft in einem Fahrzeug nach dem Oberbegriff des Anspruches 1.

### Stand der Technik

Aus der DE 10 2011 078 900 A1 ist eine elektromechanische Feststellbremse mit einem elektrischen Bremsmotor bekannt, der in die Radbremseinrichtung einer hydraulischen Fahrzeugbremse des Fahrzeuges integriert ist. Mithilfe der elektromechanischen Feststellbremse kann das Fahrzeug im Stillstand am Wegrollen gehindert werden. Zum Erzeugen von Bremskraft wird der elektrische Bremsmotor betätigt und die Rotationsbewegung in eine axiale Stellbewegung einer Spindelmutter übertragen, über die ein Bremskolben, der Träger eines Bremsbelages ist, axial gegen eine Bremsscheibe gedrückt wird.

Das Hydraulikfluid der hydraulischen Fahrzeugbremse wirkt ebenfalls auf den Bremskolben, um im regulären Bremsbetrieb während der Fahrt des Fahrzeuges eine Bremskraft zu erzeugen.

Die DE 197 36 997 A1 offenbart ein elektrohydraulisches Bremssystem mit elektromotorischer Stelleinrichtung mit Einstellung des Lüftspiels an einer Radbremse. Zunächst wird diejenige Position festgestellt, bei der der Übergang der Bremsscheiben in den Bewegungszustand ohne Bremskraft erfolgt. Anschließend wird der Elektromotor in der Stelleinrichtung wieder an die Bremsscheibe herangefahren und ein kurzer negativer Ansteuerimpuls erzeugt, sobald ein Kraft- oder Momentensignal größer als ein Schwellwert detektiert wird

### Offenbarung der Erfindung

Die Erfindung bezieht sich auf ein Verfahren zur Positionierung der Spindelmutter an einer automatisierten Parkbremse aus dem geschlossenen Zustand heraus. Mithilfe des erfindungsgemäßen Verfahrens kann eine Bremskraft in einem Fahrzeug bereitgestellt werden, das mit einer hydraulischen Fahrzeugbremse sowie mit einer elektromechanischen Bremsvorrichtung versehen ist, wobei die elektromechanische Bremsvorrichtung einen elektrischen Bremsmotor aufweist, der auf den gleichen Bremskolben wie die hydraulische Fahrzeugbremse wirkt. Der Bremskolben trägt einen Bremsbelag, der im Fall einer Bremsung gegen eine Bremsscheibe gepresst wird. Bei einer Betätigung der elektromechanischen Bremsvorrichtung wird die Rotationsbewegung des Rotors des elektrischen Bremsmotors vorteilhafterweise in eine axiale Stellbewegung einer Spindelmutter übertragen, die gegen den Bremskolben drückt.

Die hydraulische Fahrzeugbremse umfasst eine oder mehrere Radbremseinrichtungen an einem bzw. mehreren Rädern des Fahrzeugs, in denen unter Hydraulikdruck stehendes Bremsfluid den gleichen Bremskolben beaufschlagt, der auch von dem elektrischen Bremsmotor der elektromechanischen Bremsvorrichtung verstellt wird. Der Bremskolben kann alternativ entweder von der hydraulischen Fahrzeugbremse oder von der elektromechanischen Bremsvorrichtung betätigt werden. Es ist auch eine Kombination möglich, so dass der Bremskolben sowohl von dem elektrischen Bremsmotor als auch von dem Bremsfluid der hydraulischen Fahrzeugbremse beaufschlagt bzw. verstellt wird.

Bei dem Verfahren zum Bereitstellen einer Bremskraft wird während des Lösens der elektromechanischen Bremsvorrichtung - bei der Überführung vom zugespannten Zustand mit elektromechanischer Bremskraft in den gelösten Zustand ohne elektromechanische Bremskraft - aus einer elektromotorischen Zustandsgröße des elektrischen Bremsmotors die Position des Bremskolbens am Bremskontaktpunkt festgestellt. Der Bremskontaktpunkt ist diejenige Position des Bremskolbens, an dem der Bremskolben bzw. der vom Bremskolben beaufschlagte Bremsbelag ohne Lüftspiel an der Bremsscheibe anliegt. Der Bremskontaktpunkt des Bremskolbens wird abgespeichert, so dass die Position des Bremskontaktpunktes zu einem späteren Zeitpunkt zur Verfügung steht.

Anschließend wird bei einem darauf folgenden, zu erwartenden Bremsvorgang während eines Positionierungsvorgangs der Bremskolben noch vor dem Erzeugen einer Bremskraft bis zu einem Bremsstartpunkt verfahren, der zwischen einer bremsmoment- bzw. bremskraftfreien Ausgangsposition des Bremskolbens und dem Bremskontaktpunkt liegt. Der Bremsstartpunkt weist einen Abstand zu dem Bremskontaktpunkt auf, so dass im Bremsstartpunkt noch keine elektromotorische Bremskraft erzeugt wird und ein ausreichender Abstand zwischen Bremsbelag und Bremsscheibe besteht, um mit hinreichender Sicherheit einen versehentlichen Kontakt und somit ein Bremsenschleifen auszuschließen. Zugleich ist jedoch der verbleibende Leerweg zwischen dem Bremsstartpunkt und dem Bremskontaktpunkt reduziert, so dass bei Anforderung einer elektromechanisch bereitzustellenden Bremskraft der Bremskolben den verbleibenden Leerweg in kürzestmöglicher Zeit überwinden und der Aufbau der elektromechanischen Bremskraft stattfinden kann. Insgesamt ist auf diese Weise die Zeitspanne verkürzt, die zum Aufbau einer elektromechanischen Bremskraft benötigt wird.

Der Bremskolben wird zunächst in einem Positionierungsvorgang vor dem Erzeugen elektromechanischer Bremskraft bis zum Bremsstartpunkt verfahren und verharrt an diesem Punkt so lange, bis eine Anforderung zur Erzeugung einer elektromechanischen Bremskraft vorliegt. Daraufhin wird der elektrische Bremsmotor erneut betätigt und der Bremskolben vom Bremsstartpunkt in Richtung des Bremskontaktpunktes zum Erzeugen der elektromechanischen Bremskraft verfahren.

Es sind verschiedene Bremssituationen möglich, in denen das erfindungsgemäße Verfahren zum Bereitstellen der Bremskraft durchgeführt werden kann. Gemäß einer vorteilhaften Ausführung wird der Bremskontaktpunkt unmittelbar aus der Bremsposition des Bremskolbens eines vorangegangenen Bremsvorganges angesteuert. Bei dieser Vorgehensweise wird der Bremskolben nicht bis zur bremsmomentfreien Ausgangsposition verfahren, sondern direkt aus der Bremsposition zum Bremskontaktpunkt bewegt. Diese Vorgehensweise hat den Vorteil, dass der Lösevorgang in kürzerer Zeit durchgeführt werden kann. Anschließend steht der Bremskolben im Bremsstartpunkt und kann bei Anforderung einer elektromechanischen Bremskraft in kürzestmöglicher Zeit in Richtung des Bremskontaktpunktes verstellt werden, ab dem beim Zuspannen auf elektromechanischem Weg Bremskraft aufgebaut wird.

Vorteilhaft ist es auch, dass die Ausgangsposition des Bremskolbens näher an dem Bremskontaktpunkt gewählt werden kann, so dass kürzere Wege zum Erreichen der Ausgangsposition sowie zum Erreichen des Bremsstartpunktes, ausgehend von der Ausgangsposition zurückzulegen sind. Auch bei einem regulären elektromechanischen Bremsvorgang sind die Wege des Bremskolbens reduziert.

Gemäß einer weiteren zweckmäßigen Ausführung wird der Bremsstartpunkt des Bremskolbens aus der bremsmomentfreien Ausgangsposition heraus angesteuert. Bei dieser Ausführung wird zunächst während eines Lösevorgangs der elektromechanischen Bremsvorrichtung aus der elektromotorischen Zustandsgröße des Bremsmotors der Bremskontaktpunkt bestimmt. Anschließend wird der Bremskolben bis zum Erreichen der bremsmomentfreien Ausgangsposition verfahren. Erst zu einem sich daran anschließenden Zeitpunkt wird zunächst in dem Positionierungsvorgang der Bremskolben bis zu dem Bremsstartpunkt verfahren, von dem ausgehend der Bremskolben jederzeit zum Aufbau einer elektromechanischen Bremskraft in Richtung des Bremskontaktpunktes verstellt werden kann.

Diese Vorgehensweise wird beispielsweise in Fällen durchgeführt, bei denen der Bremsvorgang bevorzugt über die hydraulische Fahrzeugbremse und lediglich ergänzend über die elektromechanische Vorrichtung durchgeführt wird. Beispielsweise zum Durchführen eines selbsttätigen Einpark- oder Ausparkvorgangs ohne Tätigwerden des Fahrers kann eine derartige Vorgehensweise zweckmäßig sein. Aber auch bei sonstigen Fahrsituationen, zum Beispiel bei Fahrten mit höherer Geschwindigkeit, kann zur Erhöhung der Ausfallsicherheit die elektromechanische Bremsvorrichtung ergänzend betätigt werden.

In jedem Fall - sowohl bei direkter Ansteuerung des Bremsstartpunktes aus dem Bremskontaktpunkt als auch bei Ansteuerung des Bremsstartpunktes von der Ausgangsposition - wird bei ergänzender Funktionsweise der Bremsvorgang primär über die hydraulische Fahrzeugbremse durchgeführt und nur für den Fall, dass die geforderte Bremskraft nicht oder nicht vollständig über die hydraulische Fahrzeugbremse bereitgestellt werden kann, beispielsweise bei einem Ausfall der hydraulischen Fahrzeugbremse, die elektromechanische Bremsvorrichtung betätigt. Da der Bremskolben in diesen Fällen bereits in seinem Bremsstartpunkt steht, muss nur ein kurzer Leerweg bis zum Erreichen des Bremskontaktpunktes überwunden werden, so dass in verkürzter Zeit mit dem Aufbau der elektromechanischen Bremskraft begonnen werden kann.

Gemäß einer vorteilhaften Ausführung handelt es sich bei der elektromotorischen Zustandsgröße, anhand derer der Bremskontaktpunkt festgestellt wird, um den Motorstrom des elektrischen Bremsmotors. Dieser steigt bei Aufbau einer elektromechanischen Bremskraft an und bewegt sich im Leerlauf des Bremsmotors, wenn keine elektromechanische Bremskraft anliegt, auf einem konstanten Leerlaufniveau. Der als Knickpunkt ausgebildete Übergang vom konstanten Leerlaufniveau zum ansteigenden Bremskraftaufbauniveau stellt den Bremskontaktpunkt dar.

In alternativer und zusätzlicher Ausführung handelt es sich bei der elektromotorischen Zustandsgröße, die zur Bestimmung des Bremskontaktpunktes herangezogen wird, um die Motorgeschwindigkeit des elektrischen Bremsmotors. Die Motorgeschwindigkeit ist bei Bremskraftaufbau gegenüber der Leerlaufgeschwindigkeit reduziert. Auch bei der Motorgeschwindigkeit gibt es einen Knickpunkt im Übergang von der Leerlaufgeschwindigkeit zur Geschwindigkeit bei beginnendem Bremskraftaufbau, der den Bremskontaktpunkt darstellt.

Bei der Bestimmung des Bremsstartpunktes während des Lösevorgangs der elektromechanischen Bremsvorrichtung der hydraulische Vordruck in der hydraulischen Fahrzeugbremse berücksichtigt, der gemessen werden kann. Der hydraulische Vordruck führt zu einer elastischen Deformation des Bremssattels, insbesondere im linear-elastischen Bereich, wodurch sich ein Einfluss auf den Bremsstartpunkt ergibt. Ohne hydraulischen Vordruck wird der Bremsstartpunkt unmittelbar aus dem Bremskontaktpunkt bestimmt, indem beispielsweise ein konstanter Versatz zum Bremskontaktpunkt angenommen wird. Bei Anliegen eines hydraulischen Vordrucks muss die daraus resultierende elastische Verstellung des Bremssattels berücksichtigt werden, wobei mit zunehmendem Vordruck die beim Positionierungsvorgang zurückzulegende Distanz zwischen der bremsmomentfreien Ausgangsposition des Bremskolbens und dem Bremsstartpunkt abgezogen wird. Der Vordruckweg, der die elastische Deformation des Bremssattels aufgrund des anliegenden hydraulischen Vordrucks bezeichnet, wird entsprechend von der zurückzulegenden Distanz des Bremskolbens zum Erreichen des Bremsstartpunktes abgezogen.

Gemäß noch einer weiteren zweckmäßigen Ausführung wird bei der Bestimmung des Bremsstartpunktes ein zusätzlicher Toleranzwert berücksichtigt, der Toleranzen bei der Vordruckbestimmung berücksichtigt.

Die verschiedenen Verfahrensschritte laufen selbsttätig ab und werden insbesondere in einem Regel- bzw. Steuergerät durchgeführt. Dieses Steuergerät kann Bestandteil des Fahrzeugbremssystems sein oder mit dem Regel- bzw. Steuergerät des Fahrzeugbremssystems kommunizieren.

Weitere Vorteile und zweckmäßige Ausführungen sind den weiteren Ansprüchen, der Figurenbeschreibung und den Zeichnungen zu entnehmen. Es zeigen:
- Fig. 1: eine schematische Darstellung einer hydraulischen Fahrzeugbremse mit einem Bremskraftverstärker, wobei die Radbremseinrichtungen der Fahrzeugbremse an der Fahrzeughinterachse zusätzlich als elektromechanische Bremsvorrichtung mit einem elektrischen Bremsmotor ausgeführt sind,
- Fig. 2: einen Schnitt durch eine elektromechanische Bremsvorrichtung mit einem elektrischen Bremsmotor,
- Fig. 3: ein Schaubild mit dem wegabhängigen Verlauf der elektromechanischen Bremskraft,
- Fig. 4: ein Ablaufschema mit Verfahrensschritten zum Bereitstellen einer Bremskraft in einem Fahrzeug,
- Fig. 5: ein Ablaufschema mit Verfahrensschritten zum Bereitstellen einer Bremskraft in einem Fahrzeug in einer Ausführungsvariante.

In den Figuren sind gleiche Bauteile mit gleichen Bezugszeichen versehen.

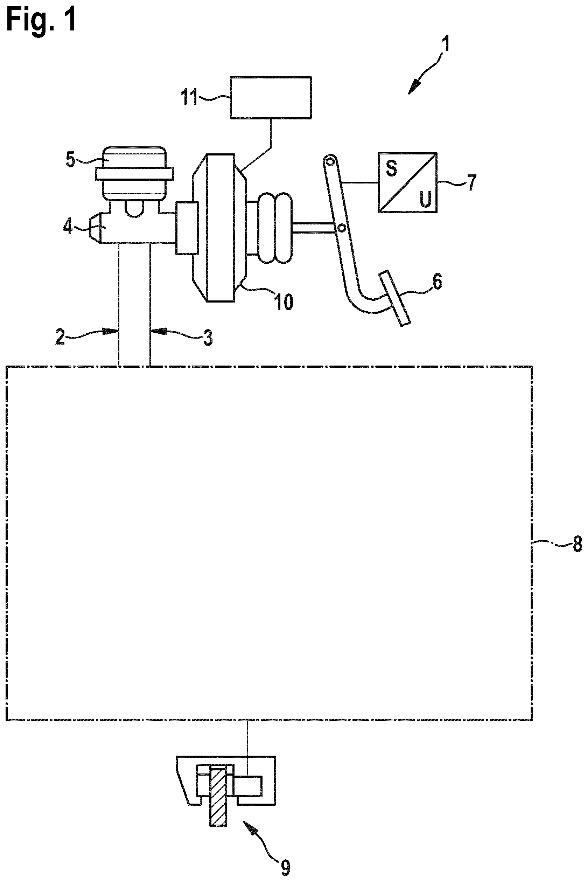

Die in Fig. 1 dargestellte hydraulische Fahrzeugbremse 1 für ein Fahrzeug umfasst einen Vorderachs-Bremskreis 2 und einen Hinterachs-Bremskreis 3 zur Versorgung und Ansteuerung von Radbremseinrichtungen 9 an jedem Rad des Fahrzeugs mit einem unter Hydraulikdruck stehenden Bremsfluid. Die beiden Bremskreise 2, 3 sind an einen gemeinsamen Hauptbremszylinder 4 angeschlossen, der über einen Bremsflüssigkeitsvorratsbehälter 5 mit Bremsfluid versorgt wird. Der Hauptbremszylinderkolben innerhalb des Hauptbremszylinders 4 wird vom Fahrer über das Bremspedal 6 betätigt, der vom Fahrer ausgeübte Pedalweg wird über einen Pedalwegsensor 7 gemessen. Zwischen dem Bremspedal 6 und dem Hauptbremszylinder 4 befindet sich ein Bremskraftverstärker 10, der beispielsweise einen Elektromotor umfasst, welcher bevorzugt über ein Getriebe den Hauptbremszylinder 4 betätigt (iBooster).

Die vom Pedalwegsensor 7 gemessene Stellbewegung des Bremspedals 6 wird als Sensorsignal an ein Regel- bzw. Steuergerät 11 übermittelt, in welchem Stellsignale zur Ansteuerung des Bremskraftverstärkers 10 erzeugt werden. Die Versorgung der Radbremseinrichtungen 9 mit Bremsfluid erfolgt in jedem Bremskreis 2, 3 über verschiedene Schaltventile, die gemeinsam mit weiteren Aggregaten Teil einer Bremshydraulik 8 sind. Zur Bremshydraulik 8 gehört des Weiteren eine Hydraulikpumpe, die Bestandteil eines elektronischen Stabilitätsprogramms (ESP) ist.

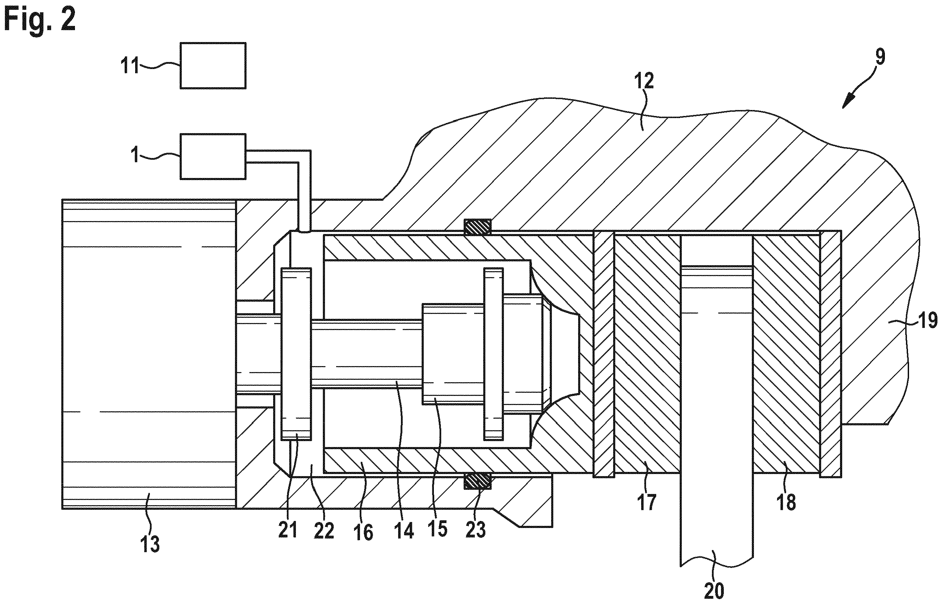

In Fig. 2 ist die Radbremseinrichtung 9, die an einem Rad an der Hinterachse des Fahrzeugs angeordnet ist, im Detail dargestellt. Die Radbremseinrichtung 9 ist Teil der hydraulischen Fahrzeugbremse 1 und wird aus dem Hinterachs-Bremskreis mit Bremsfluid 22 versorgt. Die Radbremseinrichtung 9 weist außerdem eine elektromechanische Bremsvorrichtung auf, die bevorzugt als Feststellbremse zum Festsetzen eines Fahrzeugs im Stillstand eingesetzt wird, jedoch auch bei einer Bewegung des Fahrzeugs, insbesondere bei kleineren Fahrzeuggeschwindigkeiten unterhalb eines Geschwindigkeits-Grenzwerts zum Abbremsen des Fahrzeugs eingesetzt werden kann.

Die elektromechanische Bremsvorrichtung umfasst einen Bremssattel 12 mit einer Zange 19, welche eine Bremsscheibe 20 übergreift. Als Stellglied weist die Bremsvorrichtung einen Gleichstrom-Elektromotor als Bremsmotor 13 auf, dessen Rotorwelle eine Spindel 14 rotierend antreibt, auf der eine Spindelmutter 15 rotationsfest gelagert ist. Bei einer Rotation der Spindel 14 wird die Spindelmutter 15 axial verstellt. Die Spindelmutter 15 bewegt sich innerhalb eines Bremskolbens 16, der Träger eines Bremsbelags 17 ist, welcher von dem Bremskolben 16 gegen die Bremsscheibe 20 gedrückt wird. Auf der gegenüberliegenden Seite der Bremsscheibe 20 befindet sich ein weiterer Bremsbelag 18, der ortsfest an der Zange 19 gehalten ist. Der Bremskolben 16 ist auf seiner Außenseite über einen umgreifenden Dichtring 23 druckdicht gegenüber dem aufnehmenden Gehäuse abgedichtet.

Innerhalb des Bremskolbens 16 kann sich die Spindelmutter 15 bei einer Drehbewegung der Spindel 14 axial nach vorne in Richtung auf die Bremsscheibe 20 zu bzw. bei einer entgegen gesetzten Drehbewegung der Spindel 14 axial nach hinten bis zum Erreichen eines Anschlags 21 bewegen. Zum Erzeugen einer Klemmkraft beaufschlagt die Spindelmutter 15 die innere Stirnseite des Bremskolbens 16, wodurch der axial verschieblich in der Bremsvorrichtung gelagerte Bremskolben 16 mit dem Bremsbelag 17 gegen die zugewandte Stirnfläche der Bremsscheibe 20 gedrückt wird.

Für die hydraulische Bremskraft wirkt auf den Bremskolben 16 der hydraulische Druck des Bremsfluids 22 aus der hydraulischen Fahrzeugbremse 1. Der hydraulische Druck kann auch im Fahrzeugstillstand bei Betätigung der elektromechanischen Bremsvorrichtung unterstützend wirksam sein, so dass sich die Gesamt-Bremskraft aus dem elektromotorisch gestellten Anteil und dem hydraulischen Anteil zusammensetzt. Während der Fahrt des Fahrzeugs ist entweder nur die hydraulische Fahrzeugbremse aktiv oder sowohl die hydraulische Fahrzeugbremse als auch die elektromechanische Bremsvorrichtung oder nur die elektromechanische Bremsvorrichtung, um Bremskraft zu erzeugen. Die Stellsignale zur Ansteuerung sowohl der einstellbaren Komponenten der hydraulischen Fahrzeugbremse 1 als auch der elektromechanischen Radbremseinrichtung 9 werden in dem Regel- bzw. Steuergerät 11 erzeugt.

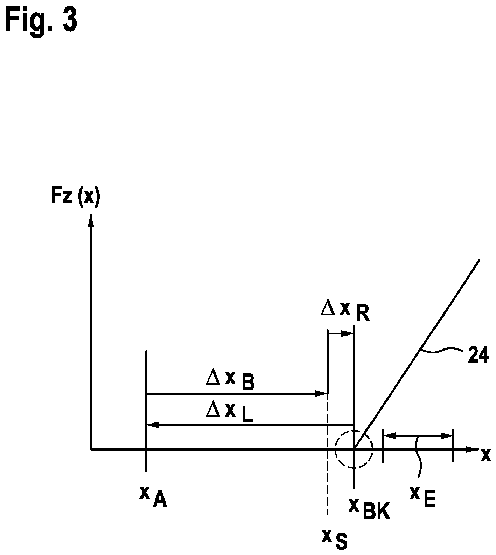

Fig. 3 zeigt ein Schaubild mit dem wegabhängigen Verlauf der elektromechanischen Bremskraft, welche bei Betätigung des elektrischen Bremsmotors der elektromechanischen Bremsvorrichtung erzeugt wird. Die bei Betätigung des elektrischen Bremsmotors während eines Bremsvorgangs erzeugte elektromechanische Bremskraft 24 liegt zunächst, ausgehend von einer Ausgangsposition x_{A}, beim Wert 0 und steigt mit dem Erreichen eines Bremskontaktpunktes x_{BK} linear an. Die Ausgangsposition x_{A} des Bremskolbens des elektrischen Bremsmotors kennzeichnet einen bremsmomentfreien Ausgangszustand. Der zurückzulegende Weg zwischen der Ausgangsposition x_{A} und dem Bremskontaktpunkt x_{BK}, an dem der Bremskolben bzw. der Bremsbelag am Bremskolben auf Kontakt zur Bremsscheibe liegt, wird als Leerweg Δx_{L} bezeichnet.

Mit dem Aufbringen von elektromechanischer Bremskraft während eines Brems- bzw. Zuspannvorgangs erreicht der Bremskolben eine Endposition x_{E}, die sich hinter dem Bremskontaktpunkt x_{BK} befindet und deren genaue Position von der Höhe der aufzubringenden elektromechanischen Bremskraft abhängt.

Mithilfe des erfindungsgemäßen Verfahrens kann während eines Positionierungsvorgangs ein Bremsstartpunkt xs bestimmt werden, der zwischen der bremsmomentfreien Ausgangsposition x_{A} und dem Bremskontaktpunkt x_{BK} liegt. Der Bremsstartpunkt xs befindet sich noch innerhalb des Leerwegs Δx_{L}, jedoch mit geringem Abstand zu dem Bremskontaktpunkt x_{BK}. Nimmt der Bremskolben die Position am Bremsstartpunkt x_{S} ein, so kann der verbleibende Leerweg Δx_{B} bis zum Erreichen des Bremskontaktpunktes x_{BK} und dem darauf folgenden Kraftaufbau in kürzestmöglicher Zeit zurückgelegt werden. Zugleich ist gewährleistet, dass ein hinreichend großes Lüftspiel zwischen den Bremsbelägen und der Bremsscheibe besteht, um ein versehentliches, unerwünschtes Schleifen der Bremsbeläge an der Bremsscheibe innerhalb des auftretenden Temperaturbereiches sicher auszuschließen.

Die Bestimmung des Bremsstartpunktes x_{S} erfolgt ausgehend von der Endposition x_{E} des Bremskolbens, die im zugespannten Zustand der elektromechanischen Bremsvorrichtung je nach Höhe der aktuell wirkenden elektromechanischen Bremskraft eine unterschiedliche Position einnehmen kann.

Wird die zugespannte elektromechanische Bremsvorrichtung gelöst, indem der elektrische Bremsmotor so angesteuert wird, dass sich der Bremskolben in Richtung der Ausgangsposition x_{A} bewegt, so nimmt die elektromechanische Bremskraft 24 bis zum Erreichen des Bremskontaktpunktes x_{BK} ab und verharrt anschließend im weiteren Weg auf dem Nullniveau. Der Übergang der elektromechanischen Bremskraft 24 vom ansteigenden bzw. abfallenden Ast zum Nullniveau im Bremskontaktpunkt x_{BK} kann anhand des abknickenden Verlaufs einer elektromotorischen Zustandsgröße des elektrischen Bremsmotors festgestellt werden, insbesondere anhand des Motorstroms, gegebenenfalls auch anhand der Motorgeschwindigkeit.

Wird die elektromechanische Bremsvorrichtung vollständig gelöst, so verfährt der Bremskolben in seine Ausgangsposition x_{A}, in der kein Bremsmoment anliegt. Die Strecke, die der Bremskolben zwischen Bremskontaktpunkt x_{BK} und der Ausgangsposition x_{A} zurücklegt, wird als Leerweg Δx_{L} bezeichnet.

Umgekehrt wird, ausgehend von der Ausgangsposition x_{A} des Bremskolbens, bis zum Erreichen des Bremsstartpunktes xs der Schließweg Δx_{B} vom Bremskolben während eines Bremsvorganges bzw. eines sich anbahnenden Bremsvorganges zurückgelegt. Der verbleibende Leerweg zwischen dem Bremsstartpunkt x_{S} und dem Bremskontaktpunkt x_{BK}, ab dem der Aufbau der elektromechanischen Bremskraft erfolgt, ist mit Δx_{R} bezeichnet.

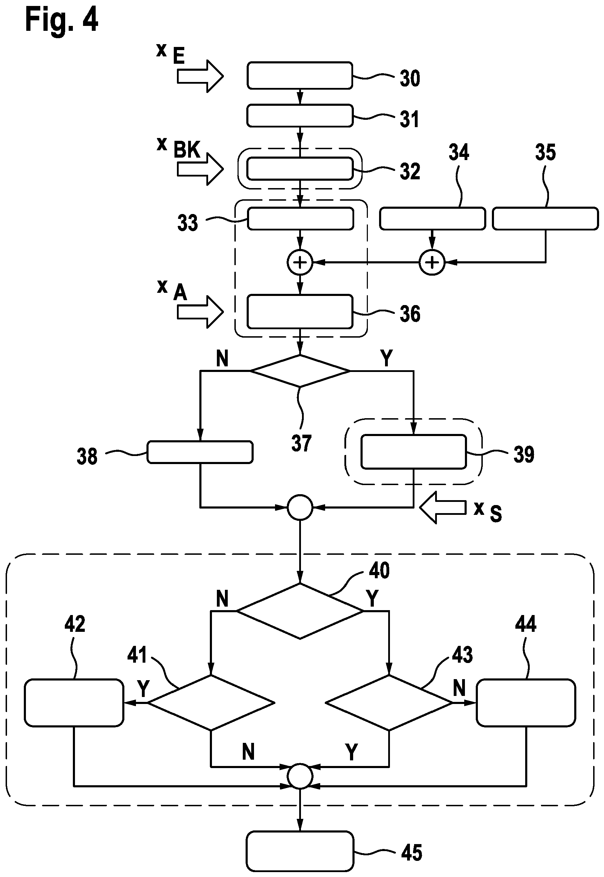

In Fig. 4 ist ein erstes Ablaufschema mit Verfahrensschritten dargestellt, mit denen elektromechanische Bremskraft in einem Fahrzeug bereitgestellt werden kann. Das Verfahren geht im ersten Schritt 30 vom zugespannten Bremszustand der elektromechanischen Bremsvorrichtung aus, bei der der Bremskolben seine Endposition x_{E} einnimmt. Im Schritt 30 wird begonnen, die zugespannte Bremsvorrichtung zu lösen, was im nächsten Verfahrensschritt 31 zum Abbau der elektromechanischen Bremskraft durchgeführt wird. Der Bremskolben wird durch Ansteuerung des elektrischen Bremsmotors in Richtung seiner bremsmomentfreien Ausgangsposition verstellt.

Im Schritt 32 erfolgt die Detektion des Bremskontaktpunktes x_{BK} anhand des Knicks im Verlauf der elektromechanisch erzeugten Bremskraft, was insbesondere anhand des Motorstromverlaufs des elektrischen Bremsmotors, gegebenenfalls auch anhand des Verlaufs der Motorgeschwindigkeit des elektrischen Motors detektiert werden kann.

Die nächsten Verfahrensschritte 33 bis 36 betreffen die Verstellbewegung des Kolbens vom Bremskontaktpunkt x_{BK} zur bremsmomentfreien Ausgangsposition x_{A}. Bei Schritt 33 wird der Weg erfasst, den der Bremskolben zurückgelegt. Der Schritt 34 bezieht sich auf die linear-elastische Verformung des Bremssattels aufgrund eines hydraulischen Vordruckes, der auf den Bremskolben wirkt und auf die Betätigung der hydraulischen Fahrzeugbremse zurückzuführen ist. Bei Kenntnis des hydraulischen Vordrucks, welcher sensorisch ermittelt wird, der Bremssattelsteifigkeit sowie der Bremskolbenfläche kann der Vordruckweg ermittelt werden, der auf die linear-elastische Verformung aufgrund des hydraulischen Vordrucks zurückzuführen ist. Dieser Vordruckweg addiert sich zu dem Leerweg, der vom Bremskolben während des Lösevorgangs zum Erreichen der Ausgangsposition erreicht werden muss.

Zusätzlich werden im Verfahrensschritt 35 Toleranzen im Kraftanstieg, im hydraulischen Vordruck sowie in der Wegberechnung berücksichtigt. Diese Toleranzen werden ebenfalls zu dem Leerweg hinzuaddiert, welcher von dem Kolben zum Erreichen der Ausgangsposition zurückgelegt werden muss (Schritt 36).

Im nächsten Schritt 37 erfolgt eine Abfrage, ob der Bremskolben zunächst in einem Positionierungsvorgang den Bremsstartpunkt xs anfahren soll. Diese Abfrage wird situationsabhängig durchgeführt. Insbesondere im Hinblick auf einen automatisierten Ein- oder Ausparkvorgang, aber gegebenenfalls auch bei regulärer Fahrt mit höheren Geschwindigkeiten, wird bevorzugt auf die hydraulische Fahrzeugbremse zum Abbremsen des Fahrzeugs zurückgegriffen und ergänzend, insbesondere im Fehlerfall der hydraulischen Fahrzeugbremse, auf die elektromechanische Bremsvorrichtung.

Um zu gewährleisten, dass bei Anforderung von elektromechanischer Bremskraft diese innerhalb kurzer Zeit bereitgestellt werden kann, wird der Bremskolben des elektrischen Bremsmotors zu seinem Bremsstartpunkt x_{S} verfahren. Diese Abfrage wird im Schritt 37 durchgeführt. Ergibt die Abfrage, dass eine Positionierung des Bremskolbens am Bremsstartpunkt gewünscht ist, wird der Ja-Verzweigung ("Y") folgend zum nächsten Schritt 39 fortgefahren, in welchem der Bremskolben angesteuert und von der Ausgangsposition x_{A} zum Bremsstartpunkt x_{S} verfahren wird. An dieser Position verharrt der Bremskolben so lange, bis eine konkrete Bremskraftanforderung an die elektromechanische Bremsvorrichtung ergeht.

Ergibt dagegen die Abfrage im Schritt 37, dass eine Positionierung des Bremskolbens am Bremsstartpunkt xs nicht gewünscht ist, wird der Nein-Verzweigung ("N") folgend zum Schritt 38 vorgerückt, gemäß dem der Bremskolben zum Durchführen eines Bremsvorganges verstellt wird, ohne jedoch an dem Bremsstartpunkt x_{S} zu verharren. Der Bremskolben wird so weit angesteuert, bis die gewünschte elektromechanische Bremskraft erreicht ist.

Die folgenden Schritte 40 bis 44 betreffen den Bremskraftaufbau über die elektromechanische Bremsvorrichtung. Zunächst erfolgt im Schritt 40 die Abfrage, ob bereits eine elektromechanische Bremskraft aufgebaut ist. Ist dies nicht der Fall, wird der Nein-Verzweigung folgend zum Schritt 41 vorgerückt, in welchem die Abfrage durchgeführt wird, ob ein Bremskraftaufbau gewünscht ist. Ist dies der Fall, wird der Ja-Verzweigung folgend im Schritt 42 der elektrische Bremsmotor in Richtung der Schließ- bzw. Zuspannposition angesteuert und eine elektromechanische Bremskraft aufgebaut. Ist dies nicht der Fall, wird der Nein-Verzweigung folgend zum Schritt 45 vorgerückt, mit dem das Verfahren beendet ist.

Ergibt dagegen die Abfrage im Schritt 40, dass bereits eine Klemmkraft aufgebaut worden ist, wird der Ja-Verzweigung folgend zum Schritt 43 vorgerückt und abgefragt, ob die Bremskraft gehalten werden soll. Trifft dies zu, wird der Ja-Verzweigung folgend ohne weitere Betätigung des elektrischen Bremsmotors zur Beendigung des Verfahrens zum Schritt 45 vorgerückt. Ergibt dagegen die Abfrage im Schritt 43, dass die erreichte Bremskraft nicht gehalten werden soll, wird der Nein-Verzweigung folgend zum Schritt 44 vorgerückt und der elektrische Bremsmotor in Richtung Öffnungs- bzw. Lösestellung angesteuert, so dass Bremskraft abgebaut wird. Anschließend wird zum Schritt 45 vorgerückt, das Verfahren ist beendet.

Bei dem Verfahren gemäß Fig. 4 wird der Bremsstartpunkt xs aus dem Bremskontaktpunkt x_{BK} bestimmt. Der Bremskolben fährt anschließend in seine Ausgangsposition x_{A} zurück und wird erst bei einem darauf folgenden, späteren Bremsvorgang zum Bremsstartpunkt xs verfahren, aus dem heraus elektromechanische Bremskraft aufgebaut wird, sobald eine entsprechende Anforderung vorliegt.

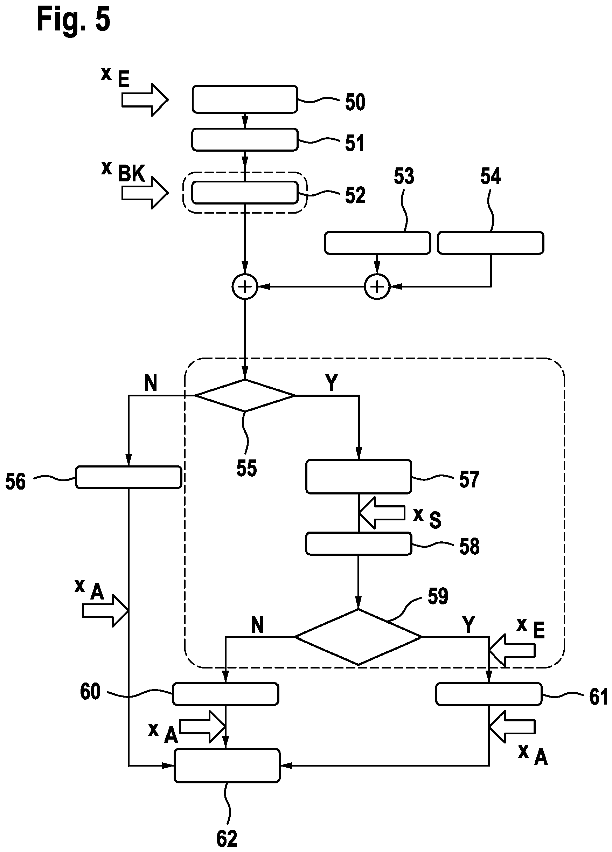

Im nächsten Verfahren gemäß Fig. 5 wird dagegen der Bremskolben im Positionierungsvorgang unmittelbar aus seiner Endposition x_{E} zum Bremsstartpunkt x_{S} verfahren, auf dem der Bremskolben bis zur Anforderung eines Bremsvorgangs verharrt.

Zunächst erfolgt gemäß Fig. 5 im Schritt 50 der Start des Lösevorganges aus dem gebremsten Zustand heraus, in welchem sich der Bremskolben in der Endposition x_{E} befindet. Mit dem Ansteuern des elektrischen Bremsmotors in Richtung der Löse- bzw. Öffnungsstellung wird im Schritt 51 die Bremskraft abgebaut. Im Schritt 52 hat der Lösekolben den Bremskontaktpunkt x_{BK} erreicht, was anhand des Verlaufs des Motorstroms oder der Motorgeschwindigkeit festgestellt wird.

In den Schritten 53 und 54 werden, entsprechend den Schritten 34 und 35 in Fig. 4, ein vordruckabhängiger zusätzlicher Weg sowie ein Zusatzweg, der auf Toleranzen zurückzuführen ist, erfasst. Diese Weganteile werden zu der Position des festgestellten Bremskontaktpunktes x_{BK} hinzuaddiert, um die Position des Bremsstartpunktes x_{S} zu erhalten.

Im nächsten Schritt 55 erfolgt eine Abfrage, ob die Ansteuerung des Bremsstartpunktes x_{S} erfolgen soll. Ist dies nicht der Fall, wird der Nein-Verzweigung folgend zum Schritt 56 vorgerückt, gemäß dem die bremsmomentfreie Ausgangsposition x_{A} des Bremskolbens angesteuert wird. Im nächsten Schritt 62 ist in diesem Fall das Verfahren beendet.

Ergibt dagegen die Abfrage im Schritt 55, dass die Ansteuerung des Bremsstartpunktes x_{S} gewünscht ist, wird der Ja-Verzweigung folgend zum Schritt 57 vorgerückt, in welchem der elektrische Bremsmotor in der Weise angesteuert wird, dass der Bremskolben beim Bremsstartpunkt xs stehen bleibt. Diese Position ist schließlich im Schritt 58 erreicht.

Im Schritt 59 erfolgt die Abfrage, ob über die elektromechanische Bremsvorrichtung verzögerungsfrei Bremskraft bereitgestellt werden soll. Dies ist nur dann der Fall, wenn die hydraulische Fahrzeugbremse, über die während des dargestellten Manövers gebremst wird, ausfällt oder zumindest die erforderliche Verzögerung nicht bereitstellen kann. In diesem Fall wird die elektromechanische Bremsvorrichtung betätigt, um ergänzend oder anstelle der hydraulischen Fahrzeugbremse die gewünschte Bremskraft zur Verfügung zu stellen. Das gesamte Fahrmanöver, auf das sich das gezeigte Verfahren bezieht, ist ein automatisierter Einpark- oder Ausparkvorgang, der ohne Fahrerbetätigung durchgeführt wird.

Ergibt die Abfrage im Schritt 59, dass keine elektromechanische Bremskraft erforderlich ist, was bei ordnungsgemäß funktionierender hydraulischer Fahrzeugbremse der Fall ist, wird der Nein-Verzweigung folgend zum nächsten Schritt 60 vorgerückt, gemäß dem der Bremskolben durch Betätigen des elektrischen Bremsmotors bis zum Erreichen der Ausgangsposition x_{A} verfahren wird. Anschließend ist im Schritt 62 das Ende des Verfahrens erreicht.

Ergibt die Abfrage im Schritt 59, dass eine elektromechanische Bremskraft erzeugt werden soll, wird der Ja-Verzweigung folgend zunächst der elektrische Bremsmotor zum Zuspannen des Bremskolbens angesteuert, bis mit dem Erreichen der Kolbenendposition x_{E} die gewünschte Bremskraft erzeugt ist. Sobald ein entsprechender Fahrerwunsch vorliegt, wird im Schritt 61 der elektrische Bremsmotor zum Lösen der elektromechanischen Bremsvorrichtung so weit angesteuert, bis die bremsmomentfreie Ausgangsposition x_{A} erreicht ist. Danach ist das Verfahren gemäß Schritt 62 beendet.

## Patentansprüche

1. Verfahren zum Bereitstellen einer Bremskraft in einem Fahrzeug, das eine hydraulische Fahrzeugbremse (1) und eine elektromechanische Bremsvorrichtung mit einem elektrischen Bremsmotor aufweist, welcher einen Bremskolben (16) gegen eine Bremsscheibe (20) verstellt, wobei während des Lösens der elektromechanischen Bremsvorrichtung aus einer elektromotorischen Zustandsgröße des elektrischen Bremsmotors die Position des Bremskolbens (16) am Bremskontaktpunkt x_{BK}) festgestellt wird, an dem der Bremskolben (16) ohne Lüftspiel an der Bremsscheibe (20) anliegt, und in einem Positionierungsvorgang der Bremskolben (16) vor dem Erzeugen von Bremskraft bis zu einem Bremsstartpunkt (xs) verfahren wird, der zwischen einer bremsmomentfreien Ausgangsposition (x_{A}) des Bremskolbens und dem Bremskontaktpunkt (x_{BK}) liegt, jedoch mit Abstand zum Bremskontaktpunkt (x_{BK}), **dadurch gekennzeichnet, dass** bei der Bestimmung des Bremsstartpunkts (x_{S}) während des Lösens der elektromechanischen Bremsvorrichtung der hydraulische Vordruck in der hydraulischen Fahrzeugbremse (1) berücksichtigt wird, wobei mit zunehmendem Vordruck die beim folgenden Bremsvorgang zurückzulegende Distanz zwischen der bremsmomentfreien Ausgangsposition des Bremskolbens (16) und dem Bremsstartpunkt (x_{S}) abnimmt.

2. Verfahren nach Anspruch 1, **dadurch gekennzeichnet, dass** der Bremskolben (16) so lange im Bremsstartpunkt (x_{S})verharrt, bis eine elektromechanische Bremsanforderung erfolgt.

3. Verfahren nach Anspruch 1 oder 2, **dadurch gekennzeichnet, dass** die elektromotorische Zustandsgröße der Motorstrom des elektrischen Bremsmotors ist.

4. Verfahren nach einem der Ansprüche 1 bis 3, **dadurch gekennzeichnet, dass** die elektromotorische Zustandsgröße die Motorgeschwindigkeit des elektrischen Bremsmotors ist.

5. Verfahren nach einem der Ansprüche 1 bis 4, **dadurch gekennzeichnet, dass** der Bremsstartpunkt (xs) unmittelbar aus der Bremsposition eines vorangegangenen Bremsvorgangs angesteuert wird.

6. Verfahren nach einem der Ansprüche 1 bis 5, **dadurch gekennzeichnet, dass** Bremsstartpunkt (x_{S}) aus der bremsmomentfreien Ausgangsposition des Bremskolbens (16) angesteuert wird.

7. Verfahren nach einem der Ansprüche 1 bis 6, **dadurch gekennzeichnet, dass** bei der Bestimmung des Bremsstartpunkts (x_{S}) ein Toleranzwert zusätzlich berücksichtigt wird.

8. Verfahren nach einem der Ansprüche 1 bis 7, **gekennzeichnet durch** ein Durchführen eines selbsttätigen Einpark- oder Ausparkvorgangs.

9. Verfahren nach einem der Ansprüche 1 bis 8, **dadurch gekennzeichnet, dass** der Bremsvorgang bevorzugt über die hydraulische Fahrzeugbremse (1) und ergänzend über die elektromechanische Bremsvorrichtung durchgeführt wird.

10. Regel- bzw. Steuergerät (11) ausgestattet zur Durchführung des Verfahrens nach einem der Ansprüche 1 bis 9.

11. Feststellbremse in einem Fahrzeug, mit einer elektromechanischen Bremsvorrichtung mit einem elektrischen Bremsmotor, der einen Bremskolben (16) in Richtung auf eine Bremsscheibe (20) verstellt, und mit einem Regel- bzw. Steuergerät (11) nach Anspruch 10 zur Ansteuerung der einstellbaren Komponenten der Feststellbremse.

## Claims

1. Method for providing a braking force in a vehicle comprising a hydraulic vehicle brake (1) and an electromechanical brake device with an electric brake motor that displaces a brake piston (16) against a brake disk (20), wherein during the releasing of the electromechanical brake device the position of the brake piston (16) at the brake contact point (x_{BK}), in which the brake piston (16) is in contact with the brake disk (20) with no air gap, is determined from an electric motor state variable of the electric brake motor, and in a positioning process the brake piston (16) is moved before the generation of braking force to a braking start point (x_{S}), which lies between a starting position (x_{A}) of the brake piston that is free of braking torque and the brake contact point (x_{BK}), but at a distance from the brake contact point (x_{BK}) , **characterized in that** during the determination of the braking start point (xs) during the releasing of the electromechanical brake device, the hydraulic bias pressure in the hydraulic vehicle brake (1) is taken into account, wherein the distance traversed during the subsequent braking process between the starting position of the brake piston (16) that is free of braking torque and the braking start point (x_{S}) decreases with increasing bias pressure.

2. Method according to Claim 1, **characterized in that** the brake piston (16) remains at the braking start point (x_{S}) until an electromechanical braking demand is carried out.

3. Method according to Claim 1 or 2, **characterized in that** the electric motor state variable is the motor current of the electric brake motor.

4. Method according to any one of Claims 1 to 3, **characterized in that** the electric motor state variable is the motor speed of the electric brake motor.

5. Method according to any one of Claims 1 to 4, **characterized in that** the braking start point (xs) is approached directly from the brake position of a preceding braking process.

6. Method according to any one of Claims 1 to 5, **characterized in that** braking start point (x_{S}) is approached from the starting position of the brake piston (16) that is free of braking torque.

7. Method according to any one of Claims 1 to 6, **characterized in that** a tolerance value is additionally taken into account during the determination of the braking start point (x_{S}).

8. Method according to any one of Claims 1 to 7, **characterized by** carrying out an automatic parking process or a process of exiting a parking space.

9. Method according to any one of Claims 1 to 8, **characterized in that** the braking process is preferably carried out by means of the hydraulic vehicle brake (1) and additionally by means of the electromechanical brake device.

10. Regulating unit or control unit (11) equipped for carrying out the method according to any one of Claims 1 to 9.

11. Parking brake in a vehicle, with an electromechanical brake device with an electric brake motor that displaces a brake piston (16) towards a brake disk (20), and with a regulating unit or a control unit (11) according to Claim 10 for actuating the adjustable components of the parking brake.

## Revendications

1. Procédé pour fournir une force de freinage dans un véhicule comportant un frein de véhicule hydraulique (1) et un dispositif de freinage électromécanique pourvu d'un moteur de freinage électrique qui déplace un piston de frein (16) contre un disque de frein (20), dans lequel, au cours du desserrage du dispositif de freinage électromécanique, la position du piston de frein (16) au niveau d'un point de contact de frein (x_{BK}) à laquelle le piston de frein (16) appuie sans jeu contre le disque de frein (20), est déterminée à partir d'une grandeur d'état électromotrice du moteur de freinage électrique, et dans un processus de positionnement, le piston de frein (16) est déplacé avant de générer une force de freinage jusqu'en un point de début de freinage (xs) qui se trouve entre une position de départ (x_{A}) du piston de frein sans couple de freinage et le point de contact de frein (x_{BK}), mais de manière espacée du point de contact de frein (x_{BK}) ,
**caractérisé en ce que**, lors de la détermination du point de début de freinage (x_{S}), pendant le desserrage du dispositif de freinage électromécanique, la pression hydraulique préalable dans le frein de véhicule hydraulique (1) est prise en compte, dans lequel la distance devant être parcourue lors du processus de freinage suivant entre la position de départ du piston de frein (16) sans couple de freinage et le point de début de freinage (xs) diminue lorsque la pression préalable augmente.

2. Procédé selon la revendication 1, **caractérisé en ce que** le piston de frein (16) reste au point de début de freinage (xs) jusqu'à ce qu'une demande de freinage électromécanique soit effectuée.

3. Procédé selon la revendication 1 ou 2, **caractérisé en ce que** la grandeur d'état électromotrice est le courant de moteur du moteur de freinage électrique.

4. Procédé selon l'une des revendications 1 à 3, **caractérisé en ce que** la grandeur d'état électromotrice est la vitesse de moteur du moteur de freinage électrique.

5. Procédé selon l'une des revendications 1 à 4, **caractérisé en ce que** le point de début de freinage (x_{S}) est commandé directement à partir de la position de frein d'un processus de freinage précédent.

6. Procédé selon l'une des revendications 1 à 5, **caractérisé en ce que** le point de début de freinage (xs) est commandé à partir de la position de départ du piston de frein (16) sans couple de freinage.

7. Procédé selon l'une des revendications 1 à 6, **caractérisé en ce qu'**une valeur de tolérance est en outre prise en compte lors de la détermination du point de début de freinage (x_{S}).

8. Procédé selon l'une des revendications 1 à 7, **caractérisé par** l'exécution d'un processus automatique de stationnement ou de sortie de stationnement.

9. Procédé selon l'une des revendications 1 à 8, **caractérisé en ce que** le processus de freinage est de préférence effectué par l'intermédiaire du frein de véhicule hydraulique (1) et de manière complémentaire, par l'intermédiaire du dispositif de freinage électromécanique.

10. Appareil de régulation ou de commande (11) conçu pour mettre en oeuvre le procédé selon l'une des revendications 1 à 9.

11. Frein de stationnement dans un véhicule, comportant un dispositif de freinage électromécanique pourvu d'un moteur de freinage électrique qui règle un piston de frein (16) dans la direction d'un disque de frein (20), et comportant un dispositif de régulation ou de commande (11) selon la revendication 10 pour commander les composants réglables du frein de stationnement.
